# EUROPÄISCHE PATENTSCHRIFT

(11) **EP 2 897 817 B1**
(45) Veröffentlichungstag und Bekanntmachung des Hinweises auf die Patenterteilung: **19.10.2016**
(21) Anmeldenummer: 13759251.5
(22) Anmeldetag: 10.09.2013
(51) Int. Cl.: B60C 23/04

(54) **VORRICHTUNG ZUM MESSEN DES REIFENDRUCKS IN EINEM LUFTREIFEN EINES FAHRZEUGS UND DAMIT AUSGERÜSTETES RAD**
DEVICE FOR MEASURING THE TYRE PRESSURE IN A PNEUMATIC TYRE OF A VEHICLE AND WHEEL EQUIPPED THEREWITH
DISPOSITIF PERMETTANT DE MESURER LA PRESSION D'UN PNEUMATIQUE D'UN VÉHICULE ET ROUE ÉQUIPÉE DUDIT DISPOSITIF

(30) Priorität: 20.09.2012 DE 102012108884; 11.12.2012 DE 102012112056
(43) Veröffentlichungstag der Anmeldung: 29.07.2015
(73) Patentinhaber: Huf Hülsbeck & Fürst GmbH & Co. KG, 42551 Velbert (DE)
(72) Erfinder: ARNOLDO, Sven, 76316 Malsch (DE); KESSLER, Ralf, 76327 Pfinztal (DE); SEIFERT, Andre, 75181 Pforzheim (DE)
(74) Vertreter: Twelmeier Mommer & Partner
(86) Internationale Anmeldenummer: PCT/EP2013/068723
(87) Internationale Veröffentlichungsnummer: WO 2014/044576

(56) Entgegenhaltungen:
- EP-A1- 1 386 759
- US-A1- 2010 024 539
- US-A1- 2011 219 865
- US-B1- 7 040 155

## Beschreibung

Die Erfindung geht aus von einer Vorrichtung zum Messen des Reifendruckes in einem Luftreifen eines Fahrzeuges und von einem mit einer solchen Vorrichtung ausgerüsteten Rad mit den im Obergriff des Anspruchs 1 angegebenen Merkmalen.

Eine aus der EP 0 751 017 B1 bekannte Vorrichtung hat ein Gehäuse aus einem formstabilen Kunststoff mit einem ungefähr quaderförmigen Sockelteil und einem mittig angeordneten Fortsatz, in welchem eine Kaverne von kalottenartiger Form ausgebildet ist, in welcher sich ein Langloch befindet. Ein Reifenventil hat an seinem innenliegenden Ende - nachfolgend als Ventilfuß bezeichnet - eine kalottenförmige Wölbung, welche in die kalottenförmige Kaverne passt, und eine Gewindebohrung, welche sich in die zum Füllen des Reifens mit Druckluft erforderlichen Ventilbohrung fortsetzt. In die Gewindebohrung kann durch das Langloch im Fortsatz des Gehäuses hindurch eine Hohlschraube gedreht werden, mit welcher das Gehäuse am Ventilfuß befestigt wird. Mit Hilfe des Langloches kann das Gehäuse nach dem Montieren des Ventils am Rad in der Weise ausgerichtet werden, dass sich das Gehäuse mit seiner dem Felgenbett des Rades zugewandten Seite am Felgenbett abstützt. Damit das Gehäuse an der Felge eine stabile Lagerung erhält, sind an den beiden vom Ventil entfernten Seitenteilen des Gehäuses, mit größtmöglichem Abstand vom Ventilfuß, zwei Füße vorgesehen, welche auf dem Felgenbett ruhen. Zusammen mit der Befestigung des Gehäuses am Ventilfuß ergibt sich dadurch eine statisch eindeutig bestimmte 3-Punkt-Lagerung für das Gehäuse.

In dem Gehäuse sind eine Druckmessvorrichtung, eine Sendeeinrichtung für das Übertragen der Druckmesswerte per Funk an einen im Fahrzeug vorgesehenen Empfänger, eine Steuereinrichtung und eine Batterie für die Stromversorgung der Vorrichtung untergebracht. Diese Bestandteile der Vorrichtung sind in eine Vergussmasse eingebettet, mit welcher das schalenförmige Gehäuse randvoll gefüllt ist, wobei die Füße des Gehäuses jedoch frei bleiben.

Beim Montieren eines Reifens auf die Felge und beim Abziehen eines Reifens von der Felge kann es vorkommen, dass die Vorrichtung zum Messen des Luftdrucks beschädigt wird. In einem solchen Fall muss die Vorrichtung komplett ausgetauscht werden. Eine Vorrichtung mit den im Oberbegriff des Anspruchs 1 angegebenen Merkmalen ist aus der EP 1 386 759 A1 bekannt. Bei dieser Vorrichtung stützt sich das Gehäuse mit einem kleinen Vorsprung auf dem Felgenbett ab, welcher sich in der Mitte des dem Ventil gegenüberliegenden Randes des Gehäuses befindet.

Der vorliegenden Erfindung liegt die Aufgabe zugrunde, die Stabilität der Vorrichtung zu verbessern und die Gefahr einer Beschädigung der Vorrichtung zum Messen des Luftdrucks zu verringern, ohne das Gewicht der Vorrichtung wesentlich zu erhöhen.

Diese Aufgabe wird durch ein Rad mit den im Patentanspruch 1 angegebenen Merkmalen und durch eine Vorrichtung zum Messen des Reifendrucks mit den im Patentanspruch 14 angegebenen Merkmalen gelöst. Vorteilhafte Weiterbildungen der Erfindung sind Gegenstand der Unteransprüche.

Das erfindungsgemäße Rad eines Fahrzeugs hat einen Luftreifen und eine Vorrichtung zum Messen des Reifendrucks in dem Luftreifen, welche in einem schalenförmigen Gehäuse untergebracht ist. Das Gehäuse ist an dem im Rad liegenden Ende eines Reifenventils angebracht. Dieses Ende wird als Ventilfuß bezeichnet. Nach bestimmungsgemäßer Montage am Rad liegt der Ventilfuß im Innenraum zwischen dem Luftreifen und einer ihn tragenden Felge, welche ein Felgenbett und zwei es begrenzende Schultern hat. Eine der beiden Schultern hat ein Loch, in welchem das Reifenventil steckt. Das am Ventilfuß befestigte Gehäuse ist so angeordnet, dass es sich auf dem Felgenbett abstützt. Erfindungsgemäß gibt es am Gehäuse nur eine einzige Stelle, mit welcher sich das Gehäuse auf dem Felgenbett abstützt. Somit ist anstelle einer im Stand der Technik bekannten 3-Punkt-Lagerung erfindungsgemäß nur noch eine 2-Punkt-Lagerung verwirklicht.

Überrascherderweise hat es sich gezeigt, dass bei einer solchen Ausbildung, bei welcher die Vorrichtung zum Messen des Reifendrucks nur noch an zwei Punkten des Rades gelagert ist, beim Montieren eines Reifens auf die Felge und beim Abziehen eines Reifens von der Felge, die Vorrichtung zum Messen des Reifendrucks weniger anfällig gegen Beschädigungen ist als eine herkömmliche Vorrichtung zum Messen des Reifendrucks, welche an drei Punkten des Rades gelagert ist. Dies ist umso überraschender, als es sich bei der erfindungsgemäß vorgesehenen 2-Punkt-Lagerung um eine statisch unbestimmte Lagerung handelt.

Es ist ein besonderer Vorteil der vorliegenden Erfindung, dass die Gefahr einer Beschädigung der Vorrichtung zum Messen des Reifendrucks beim Montieren eines Reifens und beim Abziehen eines Reifens von der Felge erreicht werden kann, ohne das Gewicht der Vorrichtung zu erhöhen. Das ist deshalb ein wesentlicher Vorteil, weil jede Erhöhung des Gewichts der Vorrichtung eine zusätzliche Unwucht des Rades erzeugen würde, welche durch Auswuchten des Rades kompensiert werden müsste.

Darüber hinaus spart der Halter des Fahrzeugs nicht unerhebliche Kosten, die durch einen Austausch von beschädigten Vorrichtungen zum Messen des Luftdrucks auf ihn zukommen können, und Werkstattpersonal muss beim Reifenwechsel keine über das normale Maß hinausgehende Vorsicht walten lassen.

Die einzige Stelle des Gehäuses, mit welchem sich das am Reifenventil angebrachte Gehäuse auf dem Felgenbett abstützen kann, befindet sich am Rand des Gehäuses, und zwar an einem Teil des Randes des Gehäuses, welcher dem Loch in der Schulter der Felge, in welcher das Reifenventil steckt, abgewandt ist. Bei dieser Ausbildung lässt sich die Erfindung besonders einfach verwirklichen. Außerdem hat diese Weiterbildung der Erfindung den Vorteil, dass eine Reifenwulst beim Montieren eines Reifens oder beim Abziehen eines Reifens von der Felge nicht über den Rand gleiten kann, welcher die Öffnung des schalenförmiges Gehäuses umgibt, sondern allenfalls über die sehr viel stabilere geschlossene Seite des schalenförmigen Gehäuses geleitet.

Die einzige Stelle, mit welcher sich das Gehäuse der Vorrichtung zum Messen des Reifendrucks auf dem Felgenbett abstützen kann, muss nicht exakt lokalisiert sein. Vielmehr besteht auch die Möglichkeit, dass sich das Gehäuse infolge der 2-Punkt-Lagerung durch Drehung um die Längsachse des Reifenventils auf dem Felgenbett begrenzt abwälzt, wodurch die Stelle, mit welcher sich das Gehäuse am Felgenbett abstützt, auf der dem Felgenbett zugewandten Seite des Gehäuses etwas wandern kann, insbesondere entlang jenes Teils des Randes des Gehäuses welcher dem Loch in der Schulter der Felge bzw. dem Ventilfuß abgewandt ist. Trotz dieser Möglichkeit, dass die Stelle, mit welcher sich das Gehäuse am Felgenbett abstützt, etwas wandern kann, bleibt es in jedem Fall bei einer 2-Punkt-Lagerung.

Vorzugsweise befindet sich die einzige Stelle, mit welcher sich das Gehäuse auf dem Felgenbett abstützt, auf einem Teil des Randes des Gehäuses, dessen dem Felgenbett zugewandte Oberfläche, welche hier auch als Endfläche bezeichnet wird, eine Krümmung hat, die kleiner ist als die Krümmung des Felgenbettes. Mit anderen Worten: Der Krümmungsradius des Felgenbettes, das ist die Strecke von der Drehachse des Rades bis zur Oberseite des Felgenbettes, ist kleiner als der Krümmungsradius des sich auf dem Felgenbett abstützenden Teil des Randes des Gehäuses. Dadurch wird eine 3-Punkt-Lagerung der Vorrichtung zum Messen des Reifendrucks ausgeschlossen.

Vorzugsweise ist die dem Felgenbett zugewandte Oberfläche jenes Teils des Randes, mit welchem sich das Gehäuse am Felgenbett abstützt, überhaupt nicht gekrümmt, sondern eben. Das erleichtert die Ausbildung des Gehäuses und erlaubt es, ein und dasselbe Gehäuse für Vorrichtungen zum Messen des Reifendrucks auf Felgen mit beliebigem Durchmesser zu verwenden. Darüber hinaus ist es auch möglich, jenen Teil des Randes des Gehäuses, mit welchem sich das Gehäuse am Felgenbett abstützt, mit einer Krümmung zu versehen, die ein der Krümmung der Felge entgegengesetztes Vorzeichen hat, bei der der Krümmungsmittelpunkt also auf der der Drehachse des Rades abgewandten Seite des Felgenbettes liegt.

Vorzugsweise liegt jener Teil des Randes des Gehäuses, mit welchem sich dieses am Felgenbett abstützt, zu beiden Seiten einer Ebene, in welcher sowohl die Drehachse des Rades als auch die Längsachse des Reifenventils liegt. Das ermöglicht einen Aufbau der Vorrichtung zum Messen des Reifendruckes, welcher symmetrisch oder weitgehend symmetrisch zur Längsachse des Reifenventils oder zu der Ebene ist, in welcher sowohl die Drehachse des Rades als auch die Längsachse des Reifenventils liegt. Ein solcher symmetrischer oder nahezu symmetrischer Aufbau ist günstig für die Aufnahme der Fliehkräfte, welche bei sich drehendem Rad auf die Vorrichtung zum Messen des Reifendrucks und auf ihre Lagerung wirken.

Der Teil des Randes des Gehäuses, mit welchem sich das Gehäuse auf dem Felgenbett abstützt, erstreckt sich bevorzugt über nicht mehr als zwei Drittel der Länge, insbesondere über nicht mehr als die Hälfte der Länge des gesamten Randes des Gehäuses. Erfindungsgemäß befindet sich dieser Teil des Randes auf jenem Randabschnitt, welcher dem Loch in der Schulter der Felge, in welcher das Reifenventil steckt, bzw. dem Ventilfuß abgewandt ist, und erstreckt sich noch ein Stück weit über die Seitenwände des Gehäuses. Der restliche Teil des Randes ist gegenüber jenem Teil des Randes, mit welchem sich das Gehäuse auf dem Felgenbett abstützt, zurückversetzt. Die Vergussmasse, welche zum Schutz der elektrischen Bestandteile der Vorrichtung zum Messen des Reifendrucks in das Gehäuse eingefüllt wird, wird zweckmäßigerweise bis zu dem zurückversetzten Teil des Randes des Gehäuses eingefüllt. Der andere Teil des Randes, mit welchem sich das Gehäuse am Felgenbett abstützen kann, ragt dann über die Oberfläche der Vergussmasse hinaus.

Der Rand insgesamt begrenzt und umgibt eine Öffnung des schalenförmigen Gehäuses. Durch diese Öffnung können die Schaltungsteile der Vorrichtung zum Messen des Reifendrucks und eine Batterie für ihre Stromversorgung in das Gehäuse eingesetzt werden. Durch diese Öffnung kann auch eine Vergussmasse in das Gehäuse eingefüllt werden, um damit den verbleibenden Freiraum im Gehäuse auszufüllen.

Der Teil des Randes, mit welchem sich das Gehäuse am Felgenbett abstützt, hat vorzugsweise eine größere Wandstärke als diesem Teil des Randes benachbarte Wandabschnitte des Gehäuses. Der verdickte Rand ist günstig, um die beim Montieren eines Reifens und beim Abziehen eines Reifens auftretenden Belastungen des Gehäuses aufzufangen und in die Felge einzuleiten.

Vorzugsweise ist der Teil des Randes, mit welchem sich das Gehäuse auf dem Felgenbett abstützt, gerundet. Das hat den Vorteil, dass der Rand des Gehäuses bei unterschiedlichen Neigungen des Gehäuses gegenüber dem daran befestigtem Reifenventil gleich gut auf dem Felgenbett liegt. Spitzenbelastungen am Rand des Gehäuses können auf diese Weise vermieden werden.

Vorzugsweise ist wenigstens der Teil des Randes, mit welchem sich das Gehäuse auf dem Felgenbett abstützt, reibungsmindernd beschichtet. Das beugt Beschädigungen des Randes des Gehäuses vor, wenn sich der Rand des Gehäuses infolge wechselnder mechanischer Belastungen auf dem Felgenbett bewegt.

Das Gehäuse und das Reifenventil können fest und unveränderlich miteinander verbunden sein. Zweckmäßigerweise ist das Gehäuse jedoch verstellbar am Reifenventil angebracht, insbesondere so, dass die Neigung des Gehäuses gegen die Längsachse des Reifenventils veränderbar ist. Das kann so verwirklicht werden, wie es die EP 0 751 017 B1 offenbart, indem dem schalenförmigen Gehäuse ein Fortsatz angeformt ist, in welchem sich eine kalottenförmige Ausnehmung mit einem Langloch darin befindet, in welche der Ventilfuß eingesetzt und mit einer Hohlschraube fixiert wird, indem diese in eine Gewindebohrung des Reifenventils eingedreht wird. Der Ventilfuß hat dazu ein balliges Ende, welches in die kalottenförmige Ausnehmung des Gehäuses passt. Solange die Hohlschraube nicht fest angezogen ist, kann die Ausrichtung des Gehäuses relativ zum Reifenventil so justiert werden, dass sich das Gehäuse am Felgenbett abstützt, und zwar an nur einer einzigen Stelle.

Das Gehäuse hat auf der Innenseite seiner der Öffnung gegenüberliegenden Wand vorzugsweise eine Rippe, welche in derselben Ebene oder ungefähr in derselben Ebene liegt, in welcher auch die Drehachse des Rades und die Längsachse des Reifenventils liegen. Eine solche Rippe hat den Vorteil, dass sie die Wand des Gehäuses versteift, über welche beim Montieren des Reifens bzw. beim Abziehen des Reifens von der Felge die Reifenwulst hinweg bewegt wird. Die Rippe liefert einen Beitrag zur Lösung der Aufgabe, Beschädigungen der Vorrichtung zum Messen des Reifendrucks beim Montieren eines Reifens und beim Abziehen eines Reifens von der Felge möglichst zu vermeiden.

Ausführungsbeispiele der Erfindung sind in den beigefügten Zeichnungen dargestellt.
- Figur 1: zeigt eine Schrägansicht des Gehäuses einer erfindungsgemäßen Vorrichtung zum Messen des Reifendrucks in einer Schrägansicht auf die dem Felgenbett abgewandte Seite,
- Figur 2: zeigt dasselbe Gehäuse in einer Schrägansicht auf die dem Felgenbett zugewandte Seite des Gehäuses,
- Figur 3: zeigt eine Vorrichtung zum Messen des Reifendrucks mit dem Gehäuse aus den Figuren 1 und 2 nach der bestimmungsgemäßen Montage an einer Felge,
- Figur 4: zeigt den Radialschnitt entlang der Schnittlinie A-A durch die Anordnung aus Figur 3,
- Figur 5: ist eine schematische Darstellung von möglichen Krümmungen jenes Randabschnittes des Gehäuses, mit welchem sich dieses auf dem Felgenbett abstützt.

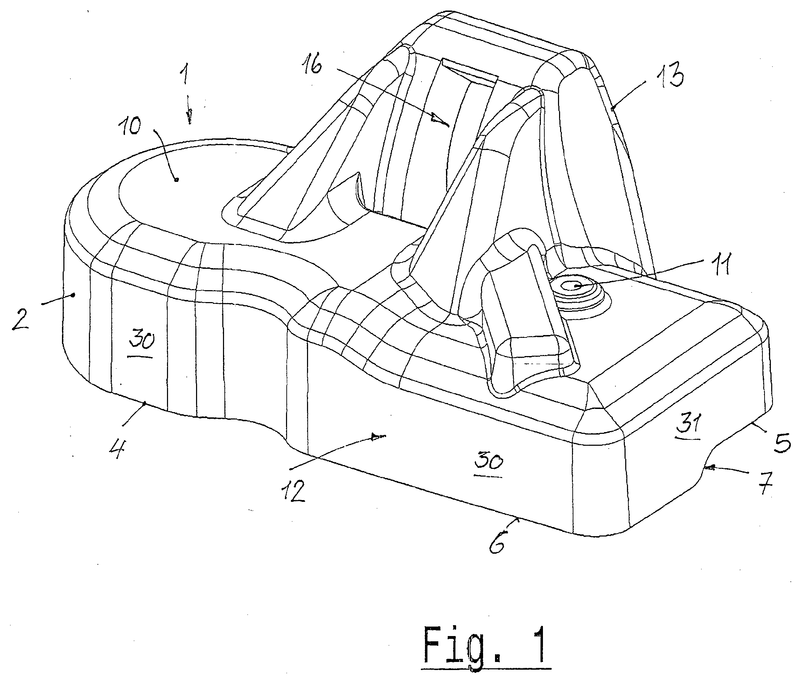

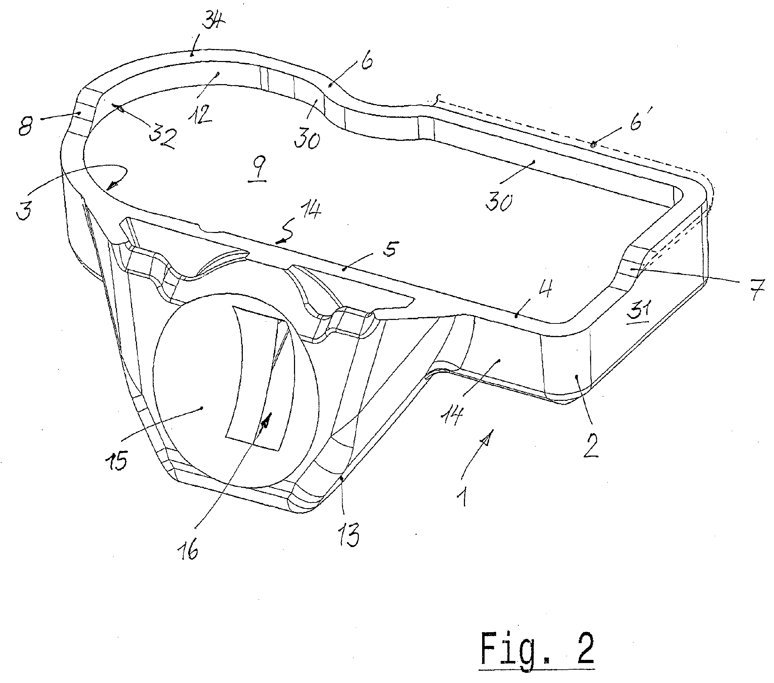

Das in den Figuren 1 bis 4 dargestellte Ausführungsbeispiel der Erfindung zeigt ein schalenförmiges, aus einem Kunststoff geformtes Gehäuse 1 mit einem Sockelteil 2, welches in der in Figur 1 dargestellten Ansicht an der Unterseite offen ist. In der in Figur 2 dargestellten Ansicht ist die offene Unterseite mit ihrer Öffnung 3 nach oben gerichtet. Die Öffnung 3 ist von einem Rand 4 umgeben, welcher in zwei Abschnitte 5 und 6 unterteilt ist. Bei Betrachtung der Figur 2 befindet sich der Randabschnitt 5 auf einem tieferen Niveau als der Randabschnitt 6. Die Endfläche des Randabschnitts 5 und die Endfläche des Randabschnitts 6 sind eben ausgebildet. Die beiden Ebenen, in welchen die Endflächen der Randabschnitte 5 und 6 liegen, sind zueinander parallel. Schrägflächen 7 und 8 bilden den Übergang zwischen den ebenen Endflächen der Randabschnitte 5 und 6. Anstelle der Schrägflächen 7 und 8 könnten auch rechtwinkelige stufenförmige Übergänge zwischen den beiden Randabschnitten 5 und 6 vorgesehen sein.

Die Endflächen der beiden Randabschnitte 5 und 6 müssen nicht eben ausgebildet sein, obwohl das für die Endfläche des Randabschnitts 5 bevorzugt wird. Die Endfläche des Randabschnittes 6 kann konvex ausgebildet sein und ist vorzugsweise auch konvex ausgebildet. Dabei wird es bevorzugt, dass der Scheitel des konvexen Randabschnittes 6 in einer Ebene liegt. Im Sinne der vorliegenden Erfindung ist das jedoch nicht zwingend: Die Höhe des Randabschnitts 6 über der Ebene, in welcher die Endfläche des Randabschnitts 5 liegt, kann auch ausgehend von der Schrägfläche 7 ansteigen bis zu einer in der Mitte des Randabschnitts 6 liegenden Stelle, an welcher sich das Gehäuse 1 nach seiner Montage an einem Rad auf dessen Felgenbett 21 abstützt, und kann dann wieder bis zur Schrägfläche 8 abfallen.

Durch die Öffnung 3 können die elektrischen Bestandteile einer Reifendruckkontrolleinrichtung in das Gehäuse eingesetzt werden. Die wesentlichen Bestandteile einer solchen Reifendruckkontrolleinrichtung sind eine Druckmesseinrichtung, eine Sendeeinrichtung für das Übertragen der Druckmesswerte per Funk an einen in einem Fahrzeug vorgesehenen Empfänger, eine Steuereinrichtung und eine Batterie für die Stromversorgung oder ein Generator, welcher aus der Bewegung, welche die Reifendruckkontrolleinrichtung zusammen mit einem Rad vollführt, elektrischen Strom erzeugt und zwischenspeichert. Die Bestandteile der Reifendruckkontrolleinrichtung sind in eine Vergussmasse 9 eingebettet, deren Niveau in Figur 2 dargestellt ist: Die Vergussmasse 9 wird zweckmäßigerweise bis zur Höhe des Randabschnittes 5 in das Gehäuse 1 einfüllt.

In der der Öffnung 3 gegenüberliegenden Wand 10 des Gehäuses 1 ist ein Loch 11 vorgesehen, durch welches die in den Luftreifen eingefüllte Luft Zutritt zu der im Gehäuse 1 angeordneten Druckmessvorrichtung hat.

Eine Umfangswand 12 des Gehäuses 1 verbindet den Rand 4 der Öffnung 3 mit der der Öffnung 3 gegenüberliegenden Wand 10 des Gehäuses. Die Umfangswand 12 kann überall die gleiche Dicke haben. Vorzugsweise ist sie jedoch am Randabschnitt 6 verdickt ausgebildet. Ein verdickter Randabschnitt 6' ist in Figur 2 ein Stück weit gestrichelt dargestellt.

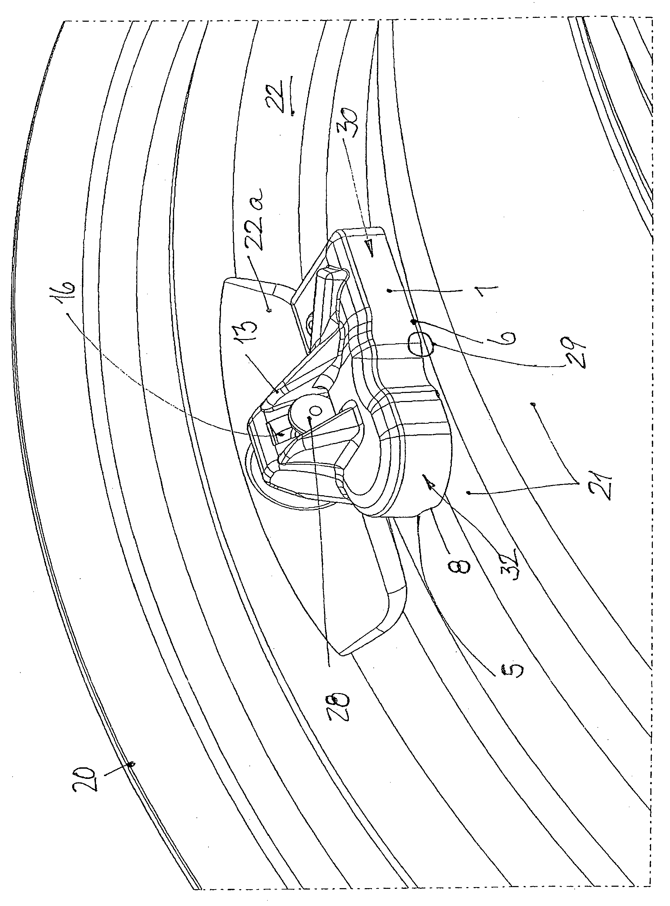

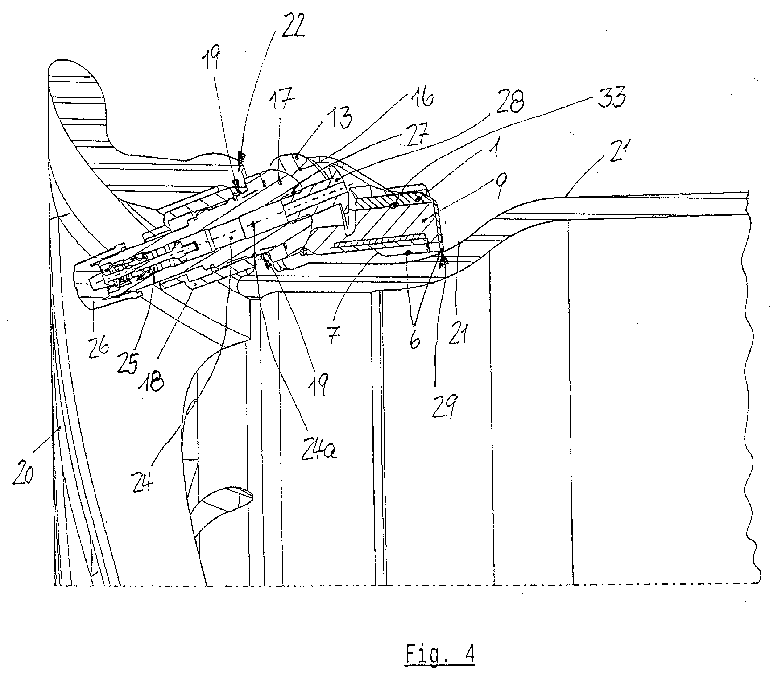

Dem Gehäuse 1 ist ein Fortsatz 13 angeformt, welcher von der der Öffnung 3 gegenüberliegenden Wand 10 sowie von einer Längsseite 14 der Umfangswand 12 ausgeht, ungefähr mittig am Gehäuse 1 angeordnet ist und sich über die Wand 10 erhebt. Auf der der Längsseite 14 abgewandten Seite des Fortsatzes 13 ist in diesem eine kalottenförmige Vertiefung 15 vorgesehen, welche durch ein mittig angeordnetes Langloch 16 durchbrochen ist, welches sich der Länge nach in Richtung vom Rand 4 zu der der Öffnung 3 gegenüberliegenden Wand 10 des Gehäuses 1 und darüber hinaus erstreckt. Dieser Fortsatz 13 dient dazu, das Gehäuse 1 am Ventilfuß 17 eines Reifenventils 18 zu befestigen, wie es in den Figuren 3 und 4 dargestellt ist. Das Reifenventil 18 steckt in bekannter Weise in einem Loch 19 einer Felge 20, welche Bestandteil eines Rades für ein Fahrzeug ist, welches mit Luftreifen ausgestattet ist. Die Felge 20 hat ein Felgenbett 21 und zwei das Felgenbett begrenzende Schultern 22. In einer Vertiefung 22a einer dieser Schultern 22 befindet sich das Loch 19, in welchem das Reifenventil 18 steckt.

Der Ventilfuß 17, das ist das im Rad liegende Ende des Reifenventils 18, ist im vorliegenden Fall ballig ausgebildet, insbesondere kalottenförmig mit einer Kalotte 23, deren Krümmungsradius dem Krümmungsradius der kalottenförmigen Ausnehmung 15 im Fortsatz 13 des Gehäuses 1 angepasst ist. Die Kalotte 23 des Ventilfußes 17 ist mittig durchbohrt. Die Bohrung ist Teil der durchgehenden Längsbohrung 24 des Reifenventils 18, in welcher auch die übliche Ventilmechanik 25 untergebracht ist, welche wie üblich am äußeren Ende des Reifenventils 18 durch eine Schraubkappe 26 geschützt ist. Ein an die Kalotte 23 anschließender Abschnitt der Längsbohrung 24 ist als Gewindebohrung 27 ausgebildet.

Die Befestigung des Gehäuses 1 am Ventilfuß 17 geschieht so, dass der Ventilfuß 17 in die kalottenförmige Vertiefung 15 des Fortsatzes 13 des Gehäuses 1 eingeführt wird und von der Rückseite der Vertiefung 15 her eine Hohlschraube 28 in die Gewindebohrung 27 gedreht wird. Dabei erlaubt es das Langloch 16 in Verbindung mit dem gegenseitigen Eingriff der Kalotten von Ventilfuß 17 und Gehäuse 1, das Gehäuse 1 so auszurichten, dass es mit seinem Randabschnitt 6, und zwar nur mit einer einzigen Stelle 29 des Randabschnitts 6, auf der kreisförmig gekrümmten Oberfläche des Felgenbettes 21 zu liegen kommt, siehe Figur 3. Auf diese Weise ist das Gehäuse nach seiner Montage an der Felge 20 an genau zwei Stellen gelagert, zum einen am Ventilfuß 17 und zum anderen an einer dem Loch 19 gegenüberliegenden Stelle auf dem Felgenbett 21. Der Randabschnitt 6, an welchem die Stelle 29 liegt, mit welcher sich das Gehäuse 1 am Felgenbett 21 abstützt, erstreckt sich über die Längsseite 30 des Gehäuses 1, welche dem Langloch 16 gegenüber liegt, und noch ein Stück weit über die Seitenwände 31 und 32, welche die Längsseiten 14 und 30 des Gehäuses 1 miteinander verbinden.

Die der Öffnung 3 gegenüberliegende Wand 10 ist durch eine innenliegende Rippe 33 versteift, siehe Figur 4.

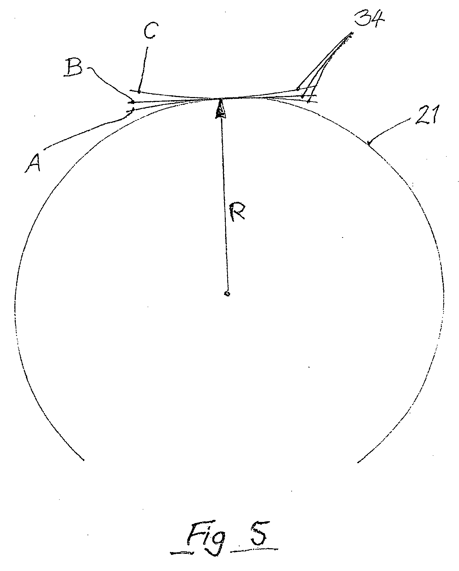

Figur 5 zeigt schematisch einen Verlauf eines Felgenbetts 21 mit dem Radius R. Der Kehrwert K des Radius R, K = 1/R, ist ein Maß für die Krümmung des Felgenbetts 21.

Das Gehäuse der Vorrichtung zum Messen des Reifendrucks wird sich mit nur einer einzigen Stelle ihres Randabschnitts 6 auf dem Felgenbett 21 abstützen,
(a) wenn die dem Felgenbett 21 zugewandte Endfläche 34 des Randabschnitts 6 eine kleinere Krümmung als die Krümmung des Felgenbetts 21 hat und die Krümmung der Endfläche 34 dasselbe Vorzeichen wie die Krümmung des Felgenbetts 21 hat; dann ist der Krümmungsradius der Endfläche 34 des Randabschnitts 6 größer als R - siehe Kurve A in Figur 9; oder
(b) wenn die Endfläche 34 des Randabschnitts 6 eben ist - siehe Kurve B in Figur 9; oder
(c) wenn die Endfläche 34 des Randabschnitts 6 eine Krümmung hat, deren Vorzeichen der Krümmung der Kurve A entgegengesetzt ist.

## Patentansprüche

1. Rad mit einer Vorrichtung zum Messen des Reifendrucks in einem Luftreifen eines Fahrzeugs,
welche in einem schalenförmigen Gehäuse (1) unterbracht ist, das an jenem Ende eines Reifenventils (18) - dieses Ende wird nachfolgend als Ventilfuß (17) bezeichnet - angebracht ist, welches nach bestimmungsgemäßer Montage am Rad im Innenraum zwischen dem Luftreifen und einer ihn tragenden Felge (20) liegt, welche ein Felgenbett (21) und zwei es begrenzende Schultern (22) hat,
von denen eine Schulter (22) ein Loch (19) hat, in welchem das Reifenventil (18) steckt, an welchem das Gehäuse (1) so angeordnet ist, dass es sich auf dem Felgenbett (21) abstützt,
wobei es am Gehäuse (1) nur eine einzige Stelle (29) gibt, mit welcher sich das Gehäuse (1) auf dem Felgenbett (21) abstützt, und
diese einzige Stelle (29) sich an einem dem Loch (19) abgewandten Abschnitt (6) eines Randes (4) des Gehäuses (1) befindet,
welcher eine Umfangswand (12) des Gehäuses (1) sowie eine Öffnung (3) zum Innenraum des schalenförmigen Gehäuses (1) begrenzt,
wobei die Umfangswand (12) zwei Längsseiten (14 und 30) sowie zwei die Längsseiten (14, 30) miteinander verbindende Seitenwände (31, 32) hat, und der Rand (4) des Gehäuses (1) in zwei Randabschnitte (5, 6) unterteilt ist, nämlich in einen ersten Randabschnitt (6), an welchem sich die einzige Stelle (29) befindet, mit welcher sich das Gehäuse (1) auf dem Felgenbett (21) abstützt, und in einen zweiten Randabschnitt (5), gegenüber dem der erste Randabschnitt (6) vorsteht,
**dadurch gekennzeichnet, dass** sich der vorstehende erste Randabschnitt (6) über die dem Loch (19) abgewandte Längsseite (30) und noch ein Stück weit über die Seitenwände (31, 32) des Gehäuses (1) erstreckt.

2. Rad nach Anspruch 1, **dadurch gekennzeichnet, dass** sich diese einzige Stelle (29) auf einem Teil (6) des Randes (4) befindet, dessen dem Felgenbett (21) zugewandte Oberfläche (34) eine Krümmung mit einem auf der Seite der Drehachse des Rades liegenden Krümmungsmittelpunkt hat, die kleiner ist als die Krümmung des Felgenbettes (21).

3. Rad nach einem der vorstehenden Ansprüche, **dadurch gekennzeichnet, dass** jener Teil (6) des Randes (4) des Gehäuses (1), mit welchem sich dieses am Felgenbett (21) abstützt, zu beiden Seiten einer Ebene liegt, in welcher sowohl die Drehachse des Rades als auch die Längsachse (24a) des Reifenventils (1) liegt.

4. Rad nach einem der vorstehenden Ansprüche, **dadurch gekennzeichnet, dass** die dem Felgenbett (21) zugewandte Oberfläche (34) jenes Teils (6) des Randes (4), mit welchem sich das Gehäuse (1) am Felgenbett (21) abstützt, in Umfangsrichtung des Randes (4) nicht gekrümmt ist.

5. Rad nach Anspruch 4, **dadurch gekennzeichnet, dass** sich der Teil (6) des Randes (4) des Gehäuses (1), welcher in Umfangsrichtung des Randes (4) nicht gekrümmt ist und mit welchem sich das Gehäuse (1) auf dem Felgenbett (21) abstützt, über nicht mehr als zwei Drittel der Länge, vorzugsweise über nicht mehr als die Hälfte der Länge des gesamten Randes (4) des Gehäuses (1) erstreckt.

6. Rad nach Anspruch 5, **dadurch gekennzeichnet, dass** die Vorrichtung zum Messen des Reifendrucks in eine Vergussmasse (9) eingebettet ist, welche in das Gehäuse (1) bis zu dessen Rand (4) eingefüllt ist, mit Ausnahme jenes Teils (6) des Randes (4), auf welchem sich die Stelle (29) befindet, mit welcher sich das Gehäuse (1) am Felgenbett (21) abstützt und gegenüber welcher der restliche Teil (5) des Randes zurückgesetzt ist.

7. Rad nach einem der vorstehenden Ansprüche, **dadurch gekennzeichnet, dass** der Teil (6) des Randes, mit welchem sich das Gehäuse (1) am Felgenbett (21) abstützt, eine größere Wandstärke hat als diesem Teil (6) des Randes benachbarte Wandabschnitte (5) des Gehäuses (1).

8. Rad nach einem der vorstehenden Ansprüche, **dadurch gekennzeichnet, dass** der Teil (6) des Randes (4), mit welchem sich das Gehäuse (1) auf dem Felgenbett (21) abstützt, im Schnitt quer zum Rand (4) gerundet ist.

9. Rad nach einem der vorstehenden Ansprüche, **dadurch gekennzeichnet, dass** der Teil (6) des Randes (4), mit welchem sich das Gehäuse (1) auf dem Felgenbett (21) abstützt, reibungsmindernd beschichtet ist.

10. Rad nach einem der vorstehenden Ansprüche, **dadurch gekennzeichnet, dass** das Gehäuse (1) verstellbar am Reifenventil (18) angebracht ist, so dass die Neigung des Gehäuses (1) gegen die Längsachse (24a) des Reifenventils (18) veränderbar ist.

11. Rad nach einem der vorstehenden Ansprüche, **dadurch gekennzeichnet, dass** das Gehäuse (1) auf der Innenseite seiner der Öffnung (3) des Gehäuses (1) gegenüberliegenden Wand (10) eine Rippe (33) hat, welche in oder ungefähr in derselben Ebene liegt, in welcher auch die Drehachse des Rades und die Längsachse (24a) des Reifenventils (24) liegen.

12. Vorrichtung zum Messen des Reifendrucks in einem mit einem Luftreifen versehenen Rad eines Fahrzeugs,
welche in einem schalenförmigen Gehäuse (1) unterbracht ist, das am Ventilfuß (17) eines Reifenventils (18) angebracht ist,
wobei es am Gehäuse (1) nur eine einzige Stelle (29) gibt, mit welcher sich das Gehäuse (1) auf dem Felgenbett (21) einer Felge (20) des Rades abstützen kann,
und diese einzige Stelle (29) sich an einem dem Ventilfuß (17) abgewandten Abschnitt (6) eines Randes (4) des Gehäuses (1) befindet,
welcher eine Umfangswand (12) des Gehäuses (1) sowie eine Öffnung (3) zum Innenraum des schalenförmigen Gehäuses (1) begrenzt,
wobei die Umfangswand (12) zwei Längsseiten (14 und 30) sowie zwei die Längsseiten (14, 30) miteinander verbindende Seitenwände (31, 32) hat, und der Rand (4) des Gehäuses (1) in zwei Randabschnitte (5, 6) unterteilt ist, nämlich in einen ersten Randabschnitt (6), an welchem sich die einzige Stelle (29) befindet, mit welcher sich das Gehäuse (1) auf dem Felgenbett (21) abstützen kann, und in einen zweiten Randabschnitt (5), gegenüber dem der erste Randabschnitt (6) vorsteht,
**dadurch gekennzeichnet, dass** sich der vorstehende erste Randabschnitt (6) über die dem Ventilfuß (17) abgewandte Längsseite (30) und noch ein Stück weit über die Seitenwände (31, 32) des Gehäuses (1) erstreckt.

## Claims

1. A wheel with a device for measuring the tyre pressure in a pneumatic tyre of a vehicle,
which is accommodated in a shell-shaped housing (1), which is arranged at the end of a tyre valve (18) - this end is subsequently designated as valve base (17) - , which after mounting, as intended, on the wheel lies in the interior between the pneumatic tyre and a rim (20) carrying it, which rim has a rim well (21) and two shoulders (22) delimiting it,
one shoulder (22) of which has a hole (19) in which the tyre valve (18) is inserted, at which valve (18) the housing (1) is arranged so that it rests on the rim well (21),
wherein there is only a single location (29) on the housing (1) by which the housing (1) rests on the rim well (21), and
this single location (29) is situated at a section (6) of an edge (4) of the housing (1) facing away from the hole (19),
which delimits a peripheral wall (12) of the housing (1) and an opening (3) to the interior of the shell-shaped housing (1),
wherein the peripheral wall (12) has two longitudinal sides (14 and 30) and two side walls (31, 32) connecting the longitudinal sides (14, 30) with one another,
and the edge (4) of the housing (1) is divided into two edge sections (5, 6), namely into a first edge section (6), at which the single location (29) is situated, by which the housing (1) rests on the rim well (21), and into a second edge section (5), beyond which the first edge section (6) projects, **characterized in that** the projecting first edge section (6) extends over the longitudinal side (30) facing away from the hole (19) and extends further somewhat over the side walls (31, 32) of the housing (1).

2. The wheel according to Claim 1, **characterized in that** this single location (29) is situated on a part (6) of the edge (4), the surface (34) of which, facing the rim well (21), has a curvature with a curvature centre point lying on the side of the rotation axis of the wheel, which curvature is smaller than the curvature of the rim well (21).

3. The wheel according to any of the preceding claims, **characterized in that** the part (6) of the edge (4) of the housing (1), by which the latter rests on the rim well (21), lies on both sides of a plane in which both the rotation axis of the wheel and also the longitudinal axis (24a) of the tyre valve (1) lies.

4. The wheel according to any of the preceding claims, **characterized in that** the surface (34), facing the rim well (21), of the part (6) of the edge (4) by which the housing (1) rests on the rim well (21) is not curved in circumferential direction of the edge (4).

5. The wheel according to Claim 4, **characterized in that** the part (6) of the edge (4) of the housing (1), which is not curved in circumferential direction of the edge (4) and by which the housing (1) rests on the rim well (21), extends over no more than two thirds of the length, preferably over no more than half the length of the entire edge (4) of the housing (1).

6. The wheel according to Claim 5, **characterized in that** the device for measuring the tyre pressure is embedded into a casting compound (9) which is filled into the housing (1) up to its edge (4), with the exception of the part (6) of the edge (4) on which the location (29) is situated by which the housing (1) rests on the rim well (21) and with respect to which the remaining part (5) of the edge is set back.

7. The wheel according to any of the preceding claims, **characterized in that** the part (6) of the edge by which the housing (1) rests on the rim well (21) has a greater wall thickness than wall sections (5) of the housing (1) adjacent to this part (6) of the edge.

8. The wheel according to any of the preceding claims, **characterized in that** the part (6) of the edge (4) by which the housing (1) rests on the rim well (21) is rounded in section transversely to the edge (4).

9. The wheel according to any of the preceding claims, **characterized in that** the part (6) of the edge (4) by which the housing (1) rests on the rim well (21) is coated in a friction-reducing manner.

10. The wheel according to any of the preceding claims, **characterized in that** the housing (1) is arranged adjustably on the tyre valve (18), so that the inclination of the housing (1) is changeable with respect to the longitudinal axis (24a) of the tyre valve (18).

11. The wheel according to any of the preceding claims, **characterized in that** the housing (1) has on the inner side of its wall (10), lying opposite the opening (3) of the housing (1), a rib (33) which lies in or approximately in the same plane in which the rotation axis of the wheel and the longitudinal axis (24a) of the tyre valve (24) also lie.

12. A device for measuring the tyre pressure in a wheel of a vehicle provided with a pneumatic tyre,
which is accommodated in a shell-shaped housing (1), which is arranged at the valve base (17) of a tyre valve (18),
wherein there is only a single location (29) on the housing (1) by which the housing (1) can rest on the rim well (21) of a rim (20) of the wheel,
and this single location (29) is situated at a section (6) of an edge (4) of the housing (1) facing away from the valve base (17),
which delimits a peripheral wall (12) of the housing (1) and an opening (3) to the interior of the shell-shaped housing (1),
wherein the peripheral wall (12) has two longitudinal sides (14 and 30) and two side walls (31, 32) connecting the longitudinal sides (14, 30) with one another, and the edge (4) of the housing (1) is divided into two edge sections (5, 6), namely into a first edge section (6), at which the single location (29) is situated, by which the housing (1) can rest on the rim well (21), and into a second edge section (5), beyond which the first edge section (6) projects, **characterized in that** the projecting first edge section (6) extends over the longitudinal side (30) facing away from the valve base (19) and extends further somewhat over the side walls (31, 32) of the housing (1).

## Revendications

1. Roue avec un dispositif pour la mesure de la pression d'un pneumatique dans un pneu à air d'un véhicule,
lequel est logé dans un boîtier (1) en forme de coupelle, qui est logé à l'extrémité de la valve de pneumatique (18), cette extrémité est par la suite désignée par embase de valve (17), laquelle se situe, après un montage conforme à ce qui est prévu, sur la roue entre le pneumatique et une jante (20) le supportant, laquelle a un fond de jante (21) et deux épaulements (22) la délimitant,
parmi lesquels un épaulement (22) a un trou (19) dans lequel la valve de pneumatique (18) est implantée, sur lequel le boîtier (1) est disposé afin qu'il s'appuie sur le fond de jante (21),
où il n'existe sur le boîtier (1) qu'un seul point (29) avec lequel le boîtier (1) s'appuie sur le fond de jante (21), et
ce seul point (29) se situe sur la partie (6) d'un bord (4) du boîtier (1) opposé au trou (19),
lequel délimite une paroi périphérique (12) du boîtier (1) ainsi qu'une ouverture (3) vers l'espace intérieur du boîtier (1) en forme de coupelle,
où la paroi périphérique (12) a deux côtés longitudinaux (14 et 30) ainsi que deux paroi latérales (31, 32) reliant ensemble les côtés longitudinaux (14, 30), et le bord (4) du boîtier (1) est subdivisé en deux sections de bord (5, 6), à savoir en une première section de bord (6) sur laquelle se situe le seul point (29) avec lequel le boîtier s'appuie sur le fond de jante (21), et en une deuxième section de bord (5), par rapport à laquelle la première section de bord (6) fait saillie,
**caractérisée en ce que** la première section de bord (6) en saillie s'étend au-dessus du côté longitudinal (30) opposé au trou (19) et sur encore une partie bien au-delà des parois latérales (31, 32) du boîtier (1).

2. Roue selon la revendication 1, **caractérisée en ce que** ce seul point (29) se trouve sur une section (6) du bord (4) dont la surface (34) orientée vers le fond de jante (21) a une courbure avec un point central de courbure se situant sur le côté de l'axe de rotation de la roue qui est inférieure à la courbure du fond de jante (21).

3. Roue selon l'une des revendications précédentes, **caractérisée en ce que** la section (6) du bord (4) du boîtier (1) avec laquelle celui-ci s'appuie sur le fond de jante (2) se situe sur deux côtés d'un plan dans lequel se situent à la fois l'axe de rotation de la roue et l'axe longitudinal (24a) de la valve de pneumatique (1).

4. Roue selon l'une des revendications précédentes, **caractérisée en ce que** la surface (34) orientée vers le fond de jante (21) de la section (6) du bord (4) avec laquelle le boîtier (1) s'appuie sur le fond de jante (21) n'est pas recourbée dans la direction circonférentielle du bord (4).

5. Roue selon la revendication 4, **caractérisée en ce que** la section (6) du bord (4) du boîtier (1), laquelle n'est pas recourbée dans la direction circonférentielle du bord (4) et avec laquelle le boîtier (1) s'appuie sur le fond de jante (21) ne s'étend pas sur plus de deux tiers de la longueur, de préférence sur pas plus de la moitié de la longueur du bord (4) complet du boitier (1).

6. Roue selon la revendication 5, **caractérisée en ce que** le dispositif pour la mesure de la pression du pneu est incorporé dans une matière de remplissage (9), laquelle est introduite dans le boîtier (1) jusqu'à son bord (4), à l'exception de la section (6) du bord (4) à laquelle se situe le point (29) par lequel le boîtier (1) s'appuie sur le fond de jante (21) et en face de laquelle la section restante (5) du bord est en retrait.

7. Roue selon l'une des revendications précédentes, **caractérisée en ce que** la section (6) du bord avec laquelle le boîtier (1) s'appuie sur le fond de jante (21) a une résistance de paroi supérieure à celle des sections de paroi (5) du boîtier (1) voisines de cette partie (6) du bord.

8. Roue selon l'une des revendications précédentes, **caractérisée en ce que** la partie (6) du bord avec laquelle le boîtier (1) s'appuie sur le fond de jante (21) est arrondie en coupe perpendiculairement par rapport au bord (4).

9. Roue selon l'une des revendications précédentes, **caractérisée en ce que** la partie (6) du bord avec laquelle le boîtier (1) s'appuie sur le fond de jante (21) est revêtue de manière à diminuer les frottements.

10. Roue selon l'une des revendications précédentes, **caractérisée en ce que** le boîtier (1) est agencé sur la valve de pneumatique (18) en pouvant être réglé de sorte que l'inclinaison du boîtier (1) contre l'axe longitudinal (24a) de la valve de pneumatique (18) peut être modifiée.

11. Roue selon l'une des revendications précédentes, **caractérisée en ce que** le boîtier (1) a une nervure (33) sur la face intérieure de sa paroi (10) se situant en face de l'ouverture (3) du boîtier (1), laquelle se situe dans ou à peu près dans le même plan dans lequel se situent également l'axe de rotation de la roue et l'axe longitudinal (24a) de la valve de pneumatique (24).

12. Dispositif de mesure de la pression d'un pneu dans une roue d'un véhicule pourvue d'un pneumatique,
lequel est logé dans un boîtier (1) en forme de coupelle qui est rapporté sur l'embase de valve (17) d'une valve de pneu (18),
où il n'y a sur le boîtier (1) qu'un seul point (29) avec lequel le boîtier (1) peut s'appuyer sur le fond de jante (21) d'une jante (20) de la roue,
et le seul point (29) se trouve sur une section (6) d'un bord (4) du boîtier (1) opposée à l'embase de valve (17),
lequel délimite une paroi périphérique (12) du boîtier (1) ainsi qu'une ouverture (3) vers l'espace intérieur du boîtier (1) en forme de coupelle,
où la paroi périphérique (12) a deux côtés longitudinaux (14 et 30), ainsi que deux parois latérales (31, 32) reliant ensemble les côtés longitudinaux (14, 30),
et le bord (4) du boîtier (1) est subdivisé en deux sections de bord (5, 6), à savoir en une première section de bord (6) sur laquelle se situe le seul point (29) avec lequel le boîtier (1) peut s'appuyer sur le fond de jante (21), et en une deuxième section de bord (5), par rapport à laquelle la première section de bord (6) fait saillie,
**caractérisé en ce que** la première section de bord (6) en saillie s'étend au-dessus du côté longitudinal (30) opposé à l'embase de valve (17) et sur encore une partie bien au-delà des parois latérales (31, 32) du boîtier (1).
